# EUROPEAN PATENT SPECIFICATION

(11) **EP 3 189 107 B1**
(45) Date of publication and mention of the grant of the patent: **28.11.2018**
(21) Application number: 15760543.7
(22) Date of filing: 19.08.2015
(51) Int. Cl.: C09D 7/00

(54) **HARDCOAT AND METHOD OF MAKING THE SAME**
HARTBESCHICHTUNG UND VERFAHREN ZUR HERSTELLUNG DAVON
REVÊTEMENT DUR ET SON PROCÉDÉ DE RÉALISATION

(30) Priority: 04.09.2014 US 201462045809 P
(43) Date of publication of application: 12.07.2017
(73) Proprietor: 3M Innovative Properties Company, St. Paul, MN 55133-3427 (US)
(72) Inventor: SUGIYAMA, Naota, Shinagawa-ku Tokyo 141-8684 (JP); GILLETTE, Kristy A., Saint Paul, Minnesota 55133-3427 (US); KOLB, Brant U., Saint Paul, Minnesota 55133-3427 (US); POKORNY, Richard J., Saint Paul, Minnesota 55133-3427 (US)
(74) Representative: Herzog, Fiesser & Partner Patentanwälte PartG mbB
(86) International application number: PCT/US2015/045790
(87) International publication number: WO 2016/036507

(56) References cited:
- EP-A1- 2 604 660
- WO-A2-2014/022363
- WO-A2-2014/022368
- US-A1- 2011 126 734
- US-A1- 2013 071 649

## Description

### Background

A variety of hardcoat materials are available to protect substrates (e.g., plastic substrates) that have a tendency to scratch in normal use. Examples of hardcoat materials include those made of binder (e.g., acrylates) and SiO₂ nanoparticles modified by photocurable silane coupling agent. In addition to scratch resistance, flexibility is also a desirable feature of hardcoat materials for some applications, although typically increasing flexibility tends to decrease the scratch resistance of a hardcoat material.

Additional hardcoat material options are desired, particularly those with desirable scratch resistance and flexibility.

PCT Pub. No. WO 2014/022368 A2 reports an anti-reflective hard coat contains a nanoparticle mixture and a binder and has a dry-etched surface. The nanoparticles constitute from 40 to 95 mass % of an entire mass of the anti-reflective hard coat. From 10 to 50 mass % of the nanoparticles have an average particle size within a range of 2 to 200 nm. From 50 to 90 mass % of the nanoparticles have an average particle size within a range of 60 to 400 nm. A ratio of the average particle size of nanoparticles having an average particle size within the range of 60 to 400 nm to the average particle size of nanoparticles having an average particle size within a range of 2 to 200 nm is from 2:1 to 200:1. The particle size distribution of the nanoparticles is bimodal or multimodal.

PCT Pub. No. WO 20140/22363 A2 reports a hard coat including a nanoparticle mixture and a binder, the nanoparticles constituting from 40 to 95 mass % of an entire mass of the hard coat; from 10 to 50 mass% of the nanoparticles having an average particle size within a range of 2 to 200 nm: from 50 to 90 mass% of the nanoparticles having an average particle size within a range of 60 to 400 nm; a ratio of the average particle size of nanoparticles having an average particle size within the range of 60 to 400 nm to the average particle size of nanoparticles having an average particle size within the range of 2 to 200 nm being within a range of 2:1 to 200:1; and the binder including a polyfunctional fluorinated (meth)acrylic compound, a reaction product thereof, or a combination thereof. The polyfunctional fluorinated (meth)acrylic compound comprises cyclic siloxane units. The particle size distribution of the nanoparticles is bimodal or multimodal.

EP Pat. Doc. No. 2604660 A1 reports a hard coating composition, and more particularly, to a hybrid coating composition configured to be applicable on a surface of plastic material of household appliances.

U.S. Pat. Pub. No. 20130071649 A1 reports a coating composition is provided comprising a) an aqueous dispersion, having a pH of less than 7.5, of silica nanoparticles having average particle diameters of 40 nanometers or less, b) an alkoxysilane oligomer; c) a silane coupling agent, and d) optionally a metal B-diketone complexing agent. The compositions may be used to prepare coated articles wherein the coating is substantially uniform in thickness, durably adheres to the substrate, and provides hydrophilic and/or antireflection surface properties to the substrate.

U.S. Pat. Pub. No. 2011/126734 A1 reports surface-modified zirconia nanoparticles. methods for making and using the same, and high index of refraction films made therefrom. The provided zirconia nanoparticles are surface modified with ligands that include N-hydroxyurea functionalities. The provided ligands also can contain compatibilizing groups that allow the provided surface-modified zirconia nanoparticles to be incorporated into an organic matrix. High index of refraction films can be made using these organic matrices.

### Summary

In one aspect, the present disclosure describes a hardcoat comprising:
a binder;
in a range from 15 to 95 (in some embodiments, in a range from 20 to 95, 20 to 90, 20 to 85, 20 to 80, 25 to 95, 25 to 90, 25 to 85, 25 to 80, or even 25 to 75) volume % nanoparticles, wherein at least a portion of the nanoparticles are functionalized by free radical reactive silane (e.g., at least one of 3-methacryloxypropyl-trimethoxysilane, 3 -acryloxypropyl-trimethoxysilane, 3 -methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane),
wherein 10 to 40 (in some embodiments, in a range from 10 to 35, or even 10 to 30) volume % of the nanoparticles are the nanoparticles having an average particle diameter in a range from 2 nm to 30 nm (in some embodiments, 10 nm to 25 nm) and 20 to 60 (in some embodiments, in a range from 30 to 60, or even 30 to 50) volume % of the nanoparticles have an average particle diameter in a range from 50 nm to 100 nm, based on the total volume of the hardcoat.

In another aspect, the present disclosure describes an article comprising a substrate having a surface, and a hardcoat layer described herein on the surface of the substrate.

In another aspect, the present disclosure describes a method of making a hardcoat described herein, the method comprising:
providing a mixture comprising at least one of acrylic, (meth)acrylic oligomer, or monomer binder in a range from 5 weight % to 60 weight %, based on the total weight of the mixture, and nanoparticles, wherein at least a portion of the nanoparticles are functionalized by free radical reactive silane (e.g., at least one of 3-methacryloxypropyl-trimethoxysilane, 3-acryloxypropyl-trimethoxysilane, 3-methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane); and
curing the at least one of acrylic, (meth)acrylic oligomer, or monomer binder to provide the hardcoat.

Hardcoats described herein are useful, for example, on portable and non-portable information display articles (e.g., illuminated and non-illuminated display articles). Embodiments of hardcoats described herein have desirable scratch resistance and flexibility.

### Detailed Description

Exemplary binders include acrylics (e.g., silicone acrylate), (meth)acrylic oligomers, or monomers (e.g., a fluoroacrylate), and are commercially available, for example, from Arkema Group, Clear Lake, TX, under the trade designation "SARTOMER". Exemplary surfactants include those available under the trade designations "KY1203" from Shin-Etsu Chemical Co., Tokyo, Japan, and "TEGORAD 2500" from Evonik Industries AG, Mobile, AL.

Exemplary nanoparticles include SiO₂, ZrO₂, or Sb doped SnO₂ nanoparticles, and SiO₂ nanoparticles are commercially available, for example, from Nissan Chemical Industries, Ltd., Tokyo, Japan; C. I. Kasei Company, Limited, Tokyo, Japan; and Nalco Company, Naperville, IL. ZrO₂, nanoparticles are commercially available, for example, from Nissan Chemical Industries. Sb doped SnO nanoparticles are commercially available, for example, from Advanced Nanoproducts, Sejong-si, South Korea.

Exemplary nanoparticles include SiO₂ or ZrO₂ nanoparticles. The nanoparticles can consist essentially of or consist of a single oxide such as silica, or can comprise a combination of oxides, or a core of an oxide of one type (or a core of a material other than a metal oxide) on which is deposited an oxide of another type. The nanoparticles are often provided in the form of a sol containing a colloidal dispersion of inorganic oxide particles in liquid media. The sol can be prepared using a variety of techniques and in a variety of forms including hydrosols (where water serves as the liquid medium), organosols (where organic liquids so serve), and mixed sols (where the liquid medium contains both water and an organic liquid).

Aqueous colloidal silicas dispersions are commercially available, for example, from Nalco Chemical Co., Naperville, IL, under the trade designation "NALCO COLLODIAL SILICAS" such as products 1040, 1042, 1050, 1060, 2327, 2329, and 2329K, or Nissan Chemical America Corporation, Houston, TX, under the trade designation "SNOWTEX". Organic dispersions of colloidal silicas are commercially available, for example, from Nissan Chemical under the trade designation "ORGANOSILICASOL". Suitable fumed silicas include products commercially available, for example, from Evonik DeGussa Corp., Parsippany, NJ, under the trade designation, "AEROSIL SERIES OX-50", as well as product numbers -130, -150, and -200. Fumed silicas are also commercially available, for example, from Cabot Corp., Tuscola, IL, under the trade designations "CAB-O-SPERSE 2095", "CAB-O-SPERSE A105", and "CAB-O-SIL M5".

It may be desirable to employ a mixture of oxide particle types to optimize an optical property, material property, or to lower that total composition cost.

In some embodiments, the hardcoat may comprise various high refractive index inorganic nanoparticles. Such nanoparticles have a refractive index of at least 1.60, 1.65, 1.70, 1.75, 1.80, 1.85, 1.90, 1.95, 2.00, or higher. High refractive index inorganic nanoparticles include zirconia (ZrO₂), titania (TiO₂), antimony oxides, alumina, tin oxides, alone or in combination. Mixed metal oxides may also be employed.

Zirconias for use in the high refractive index layer are available, for example, from Nalco Chemical Co. under the trade designation "NALCO OOSSOO8", Buhler AG, Uzwil, Switzerland, under the trade designation "BUHLER ZIRCONIA Z-WO SOL" and Nissan Chemical America Corporation under the trade designation "NANOUSE ZR". Zirconia nanoparticles can also be prepared such as described, for example, in U.S. Pat. Nos. 7,241,437 (Davidson et al.) and 6,376,590 (Kolb et al.). A nanoparticle dispersion that comprises a mixture of tin oxide and zirconia covered by antimony oxide (RI ∼1.9) is commercially available, for example, from Nissan Chemical America Corporation under the trade designation "HX-05M5". A tin oxide nanoparticle dispersion (RI ∼2.0) is commercially available, for example, from Nissan Chemicals Corp. under the trade designation "CX-S401M".

At least a portion of the nanoparticles are functionalized by free radical reactive silane (e.g., at least one of 3-methacryloxypropyl-trimethoxysilane, 3-acryloxypropyl-trimethoxysilane, 3-methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane). An exemplary 3-methacryloxypropyl-trimethoxysilane is available, for example, under the trade designation "SILQUESTTM A-174" from Alfa Aesar, Ward Hill, MA. An exemplary 3-acryloxypropyl-trimethoxysilane is available, for example, under the trade designation "SIA0200.0" from Gelest, Morrisville, PA. An exemplary 3-methacryloxypropyl-triethoxysilane is available, for example, under the trade designation "SIM6487.3" from Gelest. An exemplary acryloxyethyl-trimethoxysilane is available, for example, under the trade designation "SIA0182.0" from Gelest. An exemplary vinyl triethoxysilane is available, for example, under the trade designation "SIV9112.0" from Gelest. An exemplary 3-cyanopropyl triethoxy silane is available, for example from Sigma-Aldrich Corporation, St. Louis, MO. An exemplary 3-cyanobutyl triethoxy silane is available, for example, under the trade designation "SIC2439.0" from Gelest. An exemplary 2-cyanoethyl triethoxy silane is available, for example, under the trade designation "SIC2445.0" from Gelest.

In general, a surface treatment agent has a first end that will attach to the particle surface (covalently, ionically, or through strong physisorption) and a second end that imparts compatibility of the particle with the resin and/or reacts with resin during curing. Examples of surface treatment agents include alcohols, amines, carboxylic acids, sulfonic acids, phosphonic acids, silanes and titanates. In some embodiments, the treatment agent is determined, in part, by the chemical nature of the metal oxide surface. In some embodiments, silanes are preferred for silica and other for siliceous fillers. In some embodiments, silanes and carboxylic acids are preferred for metal oxides such as zirconia.

The surface modification can be done either subsequent to mixing with the monomers or after mixing. In some embodiments, it is preferred that to react the silanes with the nanoparticle surface before incorporation into the resin. The required amount of surface modifier may be dependent, for example, upon several factors such as particle size, particle type, modifier molecular weight, and modifier type. In general, it is preferred that approximately a monolayer of modifier is attached to the surface of the particle. The attachment procedure or reaction conditions required also depend on the surface modifier used. For silanes, in some embodiments, it is preferred to surface treat at elevated temperatures under acidic or basic conditions for about 1-24 hours. Surface treatment agents such as carboxylic acids may not require elevated temperatures or extended time.

The silane surface treatments comprise at least one alkoxy silane group when added to the inorganic oxide (e.g., silica) dispersions. The alkoxy silane group(s) hydrolyze with water to form Si-OH, (hydroxy groups). These SiOH groups then react with SiOH groups on the nano-silica surface to form silane surface treated nano-silica.

In some embodiments, the inorganic oxide (e.g., silica) nanoparticles are separately surface modified with a (e.g. copolymerizable or non-polymerizable) silane surface treatment and the hardcoat comprises a mixture of both types of surface modified inorganic oxide (e.g., silica) nanoparticles. In some embodiments, the inorganic oxide (e.g., silica) nanoparticles are concurrently surface modified with both a copolymerizable and a non-polymerizable silane surface treatment.

The inorganic oxide (e.g., silica) nanoparticles comprise at least one copolymerizable silane surface treatment. The copolymerizable silane surface treatment comprises a free-radically polymerizable group (e.g., a meth(acryl) or vinyl). The free-radically polymerizable group copolymerizes with the free-radically polymerizable (e.g., (meth)acrylate) monomers of the hardcoat composition.

Suitable (meth)acryl organosilanes include (meth)acryloy alkoxy silanes such as 3-(methacryloyloxy)propyltrimethoxysilane, 3-acryloylxypropyltrimethoxysilane, 3-(methacryloyloxy)propylmethyldimethoxysilane, 3-(acryloyloxypropyl)methyl dimethoxysilane, 3-(methacryloyloxy)propyldimethylmethoxysilane, and 3-(acryloyloxypropyl) dimethylmethoxysilane. In some embodiments, the (meth)acryl organosilanes can be favored over the acryl silanes. Suitable vinyl silanes include vinyldimethylethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, vinyltris(2-methoxyethoxy)silane. Suitable amino organosilanes are described, for example, in U.S. Pat. Pub. No. 2006/0147177, the disclosure of which is incorporated herein by reference.

Hardcoats described herein comprises in a range from 15 to 95 (in some embodiments, in a range from 20 to 95, 20 to 90, 20 to 85, 20 to 80, 25 to 95, 25 to 90, 25 to 85, 25 to 80, or even 25 to 75) volume % nanoparticles, wherein 10 to 40 (in some embodiments, in a range from 10 to 35, or even 10 to 30) volume % of the nanoparticles are the nanoparticles having an average particle diameter in a range from 2 nm to 30 nm (in some embodiments, 10 nm to 25 nm) and 20 to 60 (in some embodiments, in a range from 30 to 60, or even 30 to 50) volume % of the nanoparticles have an average particle diameter in a range from 50 nm to 100 nm, based on the total volume of the hardcoat. The average particle size of the inorganic oxide particles can be measured using transmission electron microscopy to count the number of inorganic oxide particles of a given diameter.

In some embodiments, the ratio of average particle diameters of nanoparticles having an average particle diameter in the range from 2 nm to 20 nm to average particle diameters of nanoparticles having an average particle diameter in the range from 20 nm to 100 nm is in a range from 1:2 to 1:200.

In some embodiments, 10 to 40 (in some embodiments, in a range from 10 to 35, or even 10 to 30) volume % of the nanoparticles are the nanoparticles having an average particle diameter in a range from 2 nm to 30 nm (in some embodiments, 10 nm to 25 nm) and 20 to 60 (in some embodiments, in a range from 30 to 60, or even 30 to 50) volume % of the nanoparticles have an average particle diameter in a range from 50 nm to 100 nm, based on the total volume of the hardcoat.

In some embodiments, at least a portion of at least one of the nanoparticles having the average particle diameter in a range from 2 nm to 30 nm (in some embodiments, 10 nm to 25 nm) or the nanoparticles have the average particle diameter in a range from 50 nm to 100 nm are functionalized by the free radical reactive silane and cyano group containing silane.

In some embodiments, at least a portion of both the nanoparticles having the average particle diameter in a range from 2 nm to 30 nm (in some embodiments, 10 nm to 25 nm) and the nanoparticles have the average particle diameter in a range from 50 nm to 100 nm are functionalized by the free radical reactive silane and cyano group containing silane.

In some embodiments, at least a portion of only one of the nanoparticles having the average particle diameter in a range from 2 nm to 30 nm (in some embodiments, 10 nm to 25 nm) or the nanoparticles have the average particle diameter in a range from 50 nm to 100 nm are functionalized by the free radical reactive silane and cyano group containing silane.

In some embodiments, both the nanoparticles having the average particle diameter in a range from 2 nm to 30 nm (in some embodiments, 10 nm to 25 nm) and the nanoparticles have the average particle diameter in a range from 50 nm to 100 nm are functionalized by the free radical reactive silane and cyano group containing silane.

In some embodiments, hardcoats described herein have a haze up to 1.0 (in some embodiments, up to 0.75, 0.5, 0.25, 0.1, 0.05, or even up to 0.01) as determined by the Haze Test in the Examples.

In some embodiments, hardcoats described herein have a thickness up to 50 micrometers (in some embodiments, up to 25 micrometers, 10 micrometers, 5 micrometers, 1 micrometer, 750 nanometers, 500 nanometers, 250 nanometers, or even up to 100 nanometers; in some embodiments, in a range from 1 micrometer to 50 micrometer, 1 micrometer to 25 micrometers, 1 micrometer to 10 micrometers, or even up to 3 micrometers to 5 micrometers).

Examples of articles having a hardcoat described herein (e.g., an article comprising a substrate having a surface, and a hardcoat layer described herein disposed on the surface of the substrate) include portable and non-portable information display articles (e.g., illuminated and non-illuminated display articles). Such displays include multi-character and multi-line, multi-character displays (e.g., liquid crystal displays ("LCDs")), plasma displays, front and rear projection displays, cathode ray tubes ("CRTs"), signage, as well as single-character or binary displays (e.g., light emitting tubes ("LEDs"), signal lamps and switches).

Illuminated display articles include, personal digital assistants (PDAs), LCD-TVs (both edge-lit and direct-lit), cell phones (including combination PDA/cell phones), touch sensitive screens, wrist watches, car navigation systems, global positioning systems, depth finders, calculators, electronic books, CD and DVD players, projection television screens, computer monitors, notebook computer displays, instrument gauges, and instrument panel covers. These devices can have planar or curved viewing faces. In some embodiments, a hardcoat described herein can be used in place of a cover glass used to protect the touch screen from becoming scratched.

In some embodiments, hardcoats described herein can be provided on films which can serve as windowpanes, heat insulation window films, energy saving windows, and shatter-resistant or shatter- proof window films.

In some embodiments, the substrate is a polymeric substrate (e.g., a substrate comprising at least one of polyethylene terephthalate or acrylic).

In some embodiments, articles described herein further comprising a primer layer between the substrate and the hardcoat layer.

In one exemplary method for making exemplary hardcoats described herein, the method comprises:
providing a mixture comprising at least one of acrylic, (meth)acrylic oligomer, or monomer binder in a range from 5 weight % to 60 weight %, based on the total weight of the mixture, and nanoparticles, wherein at least a portion of the nanoparticles are functionalized by free radical reactive silane (e.g., at least one of 3-methacryloxypropyl-trimethoxysilane, 3-acryloxypropyl-trimethoxysilane, 3-methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane); and
curing (e.g., actinic radiation (e.g., ultraviolet or e-beam)) the at least one of acrylic, (meth)acrylic oligomer, or monomer binder to provide the hardcoat.

In some embodiments, hardcoats described herein have a thickness less than 200 nanometers, 150 nanometers, 100 nanometers; or even less than 50 nanometers; in some embodiments, in a range from 50 nanometers to less than 200 nanometers, or even 50 nanometers to less than 150 nanometers.

Embodiments of hardcoats described herein have desirable scratch resistance and flexibility.

### Exemplary Embodiments

1A. A hardcoat comprising:
   a binder;
   in a range from 15 to 95 (in some embodiments, in a range from 20 to 95, 20 to 90, 20 to 85, 20 to 80, 25 to 95, 25 to 90, 25 to 85, 25 to 80, or even 25 to 75) volume % nanoparticles, wherein at least a portion of the nanoparticles are functionalized by free radical reactive silane (e.g., at least one of 3-methacryloxypropyl-trimethoxysilane, 3 -acryloxypropyl-trimethoxysilane, 3 -methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane),
   wherein 10 to 40 (in some embodiments, in a range from 10 to 35, or even 10 to 30) volume % of the nanoparticles are the nanoparticles having an average particle diameter in a range from 2 nm to 30 nm (in some embodiments, 10 nm to 25 nm) and 20 to 60 (in some embodiments, in a range from 30 to 60, or even 30 to 50) volume % of the nanoparticles have an average particle diameter in a range from 50 nm to 100 nm, based on the total volume of the hardcoat.
2A. The hardcoat of Exemplary Embodiment 1A, wherein at least a portion of at least one of the nanoparticles having the average particle diameter in a range from 2 nm to 30 nm or the nanoparticles have the average particle diameter in a range from 50 nm to 100 nm are functionalized by the free radical reactive and cyano group containing silane.
3A. The hardcoat of Exemplary Embodiment 1A, wherein at least a portion of both the nanoparticles having the average particle diameter in a range from 2 nm to 30 nm and the nanoparticles have the average particle diameter in a range from 50 nm to 100 nm are functionalized by the free radical reactive silane and cyano group containing silane.
4A. The hardcoat of Exemplary Embodiment 1A, wherein at least a portion of only one of the nanoparticles having the average particle diameter in a range from 2 nm to 30 nm or the nanoparticles have the average particle diameter in a range from 50 nm to 100 nm are functionalized by the free radical reactive silane and cyano group containing silane.
5A. The hardcoat of Exemplary Embodiment 1A, wherein both the nanoparticles having the average particle diameter in a range from 2 nm to 30 nm and the nanoparticles have the average particle diameter in a range from 50 nm to 100 nm are functionalized by the free radical reactive silane cyano group containing silane.
6A. The hardcoat of any preceding A Exemplary Embodiment having a haze up to 1.0 as determined by the Haze Test in the Examples.
7A. The hardcoat of any preceding A Exemplary Embodiment, wherein the ratio of average particle diameters of nanoparticles having an average particle diameter in the range from 2 nm to 20 nm to average particle diameters of nanoparticles having an average particle diameter in the range from 20 nm to 100 nm is in a range from 1:2 to 1:200.
8A. The hardcoat of any preceding A Exemplary Embodiment, wherein the hardcoat has a thickness up to 50 micrometers.
9A. The hardcoat of any preceding A Exemplary Embodiment, wherein the nanoparticles include at least one of SiO₂ or ZrO₂ nanoparticles.
10A. The hardcoat of any preceding A Exemplary Embodiment, wherein the binder comprises cured acrylate (e.g., acrylate polyurethane).
11A. An article comprising:
   a substrate having a surface, and
   a hardcoat layer of any preceding A Exemplary Embodiment disposed on the surface of the substrate.
12A. The article of Exemplary Embodiment 11A, wherein the substrate is a polymeric substrate.
13A. The article of Exemplary Embodiment 12A, wherein the polymeric substrate comprises at least one of polyethylene terephthalate or acrylic.
14A. The article according to any of Exemplary Embodiments 11A to 13A, further comprising a primer layer between the substrate and the hardcoat layer.
1B. A method of making the hardcoat of any of Exemplary Embodiments 1A to 10A, the method comprising:
   providing a mixture comprising at least one of acrylic, (meth)acrylic oligomer, or monomer binder in a range from 5 weight % to 60 weight %, based on the total weight of the mixture, and nanoparticles, wherein at least a portion of the nanoparticles are functionalized by free radical reactive silane (e.g., at least one of 3-methacryloxypropyl-trimethoxysilane, 3-acryloxypropyl-trimethoxysilane, 3-methacryloxypropyl-triethoxysilane, acryloxyethyl-trimethoxysilane, or vinyl triethoxysilane) and cyano group containing silane (e.g., at least one of 3-cyanopropyl triethoxy silane, 3-cyanobutyl triethoxy silane, or 2-cyanoethyl triethoxy silane); and
   curing the at least one of acrylic, (meth)acrylic oligomer, or monomer binder to provide the hardcoat.
2B. The method of Exemplary Embodiment 1B, wherein the curing includes actinic radiation (e.g., ultraviolet or e-beam).

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### Examples

| **Chemical** | **Description** | **Source** |
|---|---|---|
| "A-174" | 3-methacryloxypropyl-trimethoxysilane | obtained from Alfa Aesar, Ward Hill, MA, under trade designation "SILQUEST A-174" |
| "4H-2,2,26,6-TMP 1-O" | 4-hydroxy-2,2,6,6-tetramethylpiperidine 1-oxyl (5 wt. %) | obtained from Aldrich, Milwaukee, WI, under trade designation "PROSTAB" |
| "NALCO 2327" | 20 nm diameter SiO₂ sol | obtained from Nalco Company, Naperville, IL, under trade designation "NALCO 2327" |
| "NALCO 2329" | 75 nm diameter SiO₂ sol | obtained from Nalco Company under trade designation "NALCO 2329" |
| 1 -methoxy-2-propanol | | obtained from Aldrich |
| "EBECRYL 8701" | A trifunctional aliphatic urethane triacrylate | obtained from Daicel-Allnex, Ltd., Brussels, Belgium, under trade designation "EBECRYL 8701" |
| "IRGACURE 2959" | Photoinitiator | obtained from BASF, Vandalia, IL, under trade designation "IRGACURE 2959" |
| 3-cyanopropyl triethoxy silane | | obtained from Aldrich |
| EBECRYL 8301 | A hexafunctional aliphatic urethane acrylate | obtained from Daicel-Allnex, Ltd. under trade designation "EBECRYL 8301" |

### Test methods

### Method for determining optical properties

The optical properties such as clarity, haze, and percent transmittance (TT) of the samples prepared according to the Examples and Comparative Examples were measured by using a haze meter (obtained under the trade designation "HAZE-GUARD PLUS" from BYK Additives and Instruments, Columbia, MD). Optical properties were determined on as prepared samples (i.e., initial optical properties) and after subjecting the samples to steel wool abrasion resistance testing. The "Haze Test" is comparing the difference in haze values before and after the subjecting the samples to steel wool abrasion resistance testing.

### Method for determining adhesion performance

Adhesion performance of the samples prepared according to the Examples and Comparative Examples was evaluated by cross cut test according to JIS K5600 (April 1999), where 5 × 5 grid with 1 mm of interval (i.e., 25 one mm by one mm squares) and tape (obtained under the trade designation "NICHIBAN" from Nitto Denko CO., LTD, Osaka, Japan) was used. Presence/absence of cracks was then determined by using an optical microscope. The lack of cracking, or at least fewer cracks as compared to other samples, is an indication of more desirable, or improved flexibility.

### Method for determining steel wool abrasion resistance

The scratch resistance of the samples prepared according to the Examples and Comparative Examples was evaluated by the surface changes after the steel wool abrasion test using 30 mm diameter #0000 steel wool after 200 cycles at 11N load and at 60 cycles/min. rate. The steel wool abrasion resistance was meant to simulate the scratch resistance of the samples when in contact with prism film. After the steel wool abrasion resistance test was completed, the samples were observed for the presence of scratches and their optical properties (percent transmittance, haze, clarity, delta (Δ) Haze (i.e., haze after abrasion test-initial haze)) were measured again using the method described above. The presence of scratches was rated according to the Table 1, below.

**Table 1**

| **Presence of Scratches** | **Rating** |
|---|---|
| No scratches | 0 |
| A few very faint scratches only observed in reflection | 1 |
| Several faint scratches | 2 |
| Several faint a few deep scratches | 3 |
| Large number of deep scratches easily observed in reflected or transmitted light. Almost complete removal of coating. | 4 |

### Preparation of Surface Modified Silica Sol (Sol-1)

25.25 grams of 3-methacryloxypropyl-trimethoxysilane (A-174) and 0.5 gram of 4-hydroxy- 2,2,6,6-tetramethylpiperidine 1-oxyl (5 wt. %; 4H-2,2,6,6-TMP 1-O) were added to the mixture of 400 grams of 20 nm diameter SiO₂ sol (NALCO 2327) and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid content of the solution was close to 45 wt.%. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt.% by adding 1-methoxy-2-propanol to result in the SiO₂ sol containing surface modified SiO₂ nanoparticles with an average size of 20 nm.

### Preparation of Surface Modified Silica Sol (Sol-2)

12.1 grams of 3-methacryloxypropyl-trimethoxysilane (A-174) and 11.48 of 3-cyanopropyl triethoxy silane and 0.5 gram of 4-hydroxy- 2,2,6,6-tetramethylpiperidine 1-oxyl (5 wt. %; 4H-2,2,6,6-TMP 1-O) were added to the mixture of 400 grams of 20 nm diameter SiO₂ sol (NALCO 2327) and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid wt.% of the solution was close to 45 wt.%. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt% by adding 1-methoxy-2-propanol to result in the SiO₂ sol containing surface modified SiO₂ nanoparticles with an average size of 20 nm.

### Preparation of Surface Modified Silica Sol (Sol-3)

5.95 grams of (A-174) and 0.5 gram of 4-hydroxy- 2,2,6,6-tetramethylpiperidine 1-oxyl (5 wt. %; 4H-2,2,6,6-TMP 1-O) were added to the mixture of 400 grams 75 nm diameter SiO₂ sol (NALCO 2329) and 450 grams of 1-methoxy-2-propanol in a glass jar with stirring at room temperature for 10 minutes. The jar was sealed and placed in an oven at 80°C for 16 hours. Then, the water was removed from the resultant solution with a rotary evaporator at 60°C until the solid content of the solution was close to 45 wt. %. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt. % by adding 1-methoxy-2-propanol to result in the SiO₂ sol containing surface modified SiO₂ nanoparticles with an average size of 75 nm.

### Preparation of Hardcoat Precursor (HC-1)

1.6 gram of photoinitiator (IRGACURE 2959) and 80 grams of isocyanurate/aliphatic urethane triacrylate (EBECRYL 8701) were mixed. The mixture was adjusted to 40.5 wt. % solid by adding 1-methoxy-2-propanol and the hardcoat precursor HC-1 was provided.

### Preparation of Hard Coat Precursor (HC-2)

35.3 grams of Sol-1, 64 grams of isocyanurate/aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-2 was provided.

### Preparation of Hard Coat Precursor (HC-3)

71.1 grams of Sol-1, 48 grams of isocyanurate/aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-3 was provided.

### Preparation of Hard Coat Precursor (HC-4)

106.7 grams of Sol-1, 32 grams of isocyanurate/aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-4 was provided.

### Preparation of Hard Coat Precursor (HC-5)

106.7 grams of Sol-1, 32 grams of hexafunctional aliphatic urethane acrylate (EBECRYL 8301) were mixed. 1.6 gram of photoinitiator (IRGACURE 2959) was added to the mixture. The mixture was adjusted to 40.5 wt.% in solid by adding 1-methoxy-2-propanol and the hard coat precursor HC-5 was provided.

### Preparation of Hard Coat Precursor (HC-6)

46.7 grams of Sol-1, 86.7 grams of Sol-3, 20 grams of trifunctional aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-6 was provided.

### Preparation of Hard Coat Precursor (HC-7)

46.7 grams of Sol-1, 86.7 grams of Sol-3, 20 grams of hexafunctional aliphatic urethane acrylate (EBECRYL 8301) were mixed. 1.6 gram of photoinitiator (IRGACURE 2959) was added to the mixture. The mixture was adjusted to 40.5 wt.% in solid by adding 1-methoxy-2-propanol and the hard coat precursor HC-7 was provided.

### Preparation of Hard Coat Precursor (HC-8)

106.7 grams of Sol-2, 32 grams of isocyanurate/aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-8 was provided.

### Preparation of Hard Coat Precursor (HC-9)

46.7 grams of Sol-2, 86.7 grams of Sol-3, 20 grams of isocyanurate/aliphatic urethane triacrylate (EBECRYL 8701) were mixed. 1.6 gram of photoinitiator (IRGACURE 2959) was added to the mixture. The mixture was adjusted to 40.5 wt.% in solid by adding 1-methoxy-2-propanol and the hard coat precursor HC-9 was provided.

### Comparative Examples A to H (CE-A to CE-H) and Examples 1 and 2 (EX-1 to EX-2)

CE-A was a bare unprimed (PET) film with thickness of 50 micrometers as the substrate. No hardcoat was applied. CE-B to CE-H, EX-1, and EX-2 were each prepared by using the unprimed PET film with a thickness of 50 micrometers as a substrate. The film was fixed on a glass table with level adjustment, and then coated with hardcoat precursor solution HC-1 to HC-9, respectively, using Meyer Rod # 10 (corresponding to a wet thickness of 4.5 micrometers). After drying for 5 minutes at 60°C in air, the coated substrates of each Example and Comparative Example was passed twice through an ultraviolet (UV) irradiator (Model DRS, H-bulb, obtained from Fusion UV System Inc., Gaithersburg, MD) under nitrogen gas with speed of 12.2 m/minute (40 foot /minute).

The resulting samples of CE-A to CE-H, EX-1, and EX-2 were tested using methods described above. Table 2, below, summarizes the test data.

**Table 2**

| **Example** | **Hardcoat Precursor** | **Adhesion Performance** | | **Initial Optical Properties** | | | **Optical Properties After Steel Wool Abrasion Test** | | | | **Scratch Rating** |
|---|---|---|---|---|---|---|---|---|---|---|---|
| | | **Adhesion** | **Crack** | **TT** | **Haze** | **Clarity** | **TT** | **Haze** | **Clarity** | **Δ Haze** | |
| CE-A | Bare PET | N/A | N/A | 91.3 | 1.55 | 99.7 | N/A | N/A | N/A | N/A | N/A |
| CE-B | HC-1 | 25/25 | No Crack | 91.7 | 1.5 | 99.7 | 91.4 | 2.9 | 99.1 | 1.4 | 3 |
| CE-C | HC-2 | 25/25 | No Crack | 92.0 | 1.5 | 99.7 | 92.4 | 3.3 | 94.4 | 1.8 | 3 |
| CE-D | HC-3 | 25/25 | No Crack | 91.8 | 1.6 | 99.7 | 92.5 | 3.4 | 97.7 | 1.85 | 3 |
| CE-E | HC-4 | 25/25 | No Crack | 92.8 | 1.5 | 99.7 | 92.4 | 4.8 | 98.1 | 3.4 | 4 |
| CE-F | HC-5 | 25/25 | Crack | 92.1 | 1.5 | 99.7 | 92.3 | 1.8 | 99.7 | 0.2 | 2 |
| CE-G | HC-6 | 25/25 | No Crack | 92.0 | 1.6 | 99.7 | 92.1 | 1.8 | 99.6 | 0.2 | 2 |
| CE-H | HC-7 | 25/25 | Crack | 91.8 | 1.5 | 99.7 | 91.7 | 1.5 | 99.7 | 0.03 | 0 |
| EX-1 | HC-8 | 25/25 | No Crack | 92.2 | 1.8 | 99.2 | 92.1 | 1.9 | 99.3 | 0.09 | 0 |
| EX-2 | HC-9 | 25/25 | No Crack | 92.1 | 1.72 | 99.60 | 92.20 | 1.8 | 99.6 | 0.1 | 0 |

| | | | | | | | | | | | |
|---|---|---|---|---|---|---|---|---|---|---|---|
| N/A means not measured. | | | | | | | | | | | |

## Claims

1. A hardcoat comprising:
a binder;
in a range from 15 to 95 volume % nanoparticles, wherein at least a portion of the nanoparticles are functionalized by free radical reactive silane and cyano group containing silane,
wherein 10 to 40 volume % of the nanoparticles are the nanoparticles having an average particle diameter in a range from 2 nm to 30 nm and 20 to 60 volume % of the nanoparticles have an average particle diameter in a range from 50 nm to 100 nm, based on the total volume of the hardcoat.

2. The hardcoat of claim 1, wherein at least a portion of at least one of the nanoparticles having the average particle diameter in a range from 2 nm to 30 nm or the nanoparticles have the average particle diameter in a range from 50 nm to 100 nm are functionalized by free radical reactive silane and cyano group containing silane.

3. The hardcoat of claim 1, wherein at least a portion of both the nanoparticles having the average particle diameter in a range from 2 nm to 30 nm and the nanoparticles have the average particle diameter in a range from 50 nm to 100 nm are functionalized by free radical reactive silane and cyano group containing silane.

4. The hardcoat of claim 1, wherein at least a portion of only one of the nanoparticles having the average particle diameter in a range from 2 nm to 30 nm or the nanoparticles have the average particle diameter in a range from 50 nm to 100 nm are functionalized by free radical reactive silane and cyano group containing silane.

5. The hardcoat of claim 1, wherein both the nanoparticles having the average particle diameter in a range from 2 nm to 30 nm and the nanoparticles have the average particle diameter in a range from 50 nm to 100 nm are functionalized by free radical reactive silane and cyano group containing silane.

6. The hardcoat of any preceding claim, wherein the free radical reactive silane is at least one of 3-methacryloxypropyl-trimethoxysilane, 3 -acryloxypropyl-trimethoxysilane, 3 -methacryloxypropyl-triethoxysilane, acryloxyethyl-trimethoxysilane, or vinyl triethoxysilane and wherein the cyano group containing silane is at least one of 3-cyanopropyl triethoxy silane, 3-cyanobutyl triethoxy silane, or 2-cyanoethyl triethoxy silane.

7. The hardcoat of any preceding claim having a haze up to 1.0 as determined by the Haze Test.

8. The hardcoat of any preceding claim, wherein the ratio of average particle diameters of nanoparticles having an average particle diameter in the range from 2 nm to 20 nm to average particle diameters of nanoparticles having an average particle diameter in the range from 20 nm to 100 nm is in a range from 1:2 to 1:200.

9. An article comprising:
a substrate having a surface, and
a hardcoat layer of any preceding claim disposed on the surface of the substrate.

10. A method of making the hardcoat of any of claims 1 to 7, the method comprising:
providing a mixture comprising at least one of acrylic, (meth)acrylic oligomer, or monomer binder in a range from 5 weight % to 60 weight %, based on the total weight of the mixture, and nanoparticles, wherein at least a portion of the nanoparticles are functionalized by free radical reactive silane and cyano group containing silane; and
curing the at least one of acrylic, (meth)acrylic oligomer, or monomer binder to provide the hardcoat.

11. The hardcoat of claim 10, wherein the free radical reactive silane is at least one of 3-methacryloxypropyl-trimethoxysilane, 3 -acryloxypropyl-trimethoxysilane, 3 -methacryloxypropyl-triethoxysilane, acryloxyethyl-trimethoxysilane, or vinyl triethoxysilane and wherein the cyano group containing silane is at least one of 3-cyanopropyl triethoxy silane, 3-cyanobutyl triethoxy silane, or 2-cyanoethyl triethoxy silane.

12. The method of either claim 10 or 11, wherein the curing includes actinic radiation (e.g., ultraviolet or e-beam).

## Patentansprüche

1. Hartbeschichtung, umfassend:
ein Bindemittel;
in einem Bereich von 15 bis 95 Volumen-% Nanoteilchen, wobei zumindest ein Teil der Nanoteilchen durch radikalisches reaktives Silan und cyanogruppenhaltiges Silan funktionalisiert ist, wobei 10 bis 40 Volumen-% der Nanoteilchen die Nanoteilchen mit einem durchschnittlichen Teilchendurchmesser in einem Bereich von 2 nm bis 30 nm sind und 20 bis 60 Volumen-% der Nanopartikel einen durchschnittlichen Teilchendurchmesser in einem Bereich von 50 nm bis 100 nm aufweisen, bezogen auf das Gesamtvolumen der Hartbeschichtung.

2. Hartbeschichtung nach Anspruch 1, wobei zumindest ein Teil von mindestens einem von den Nanoteilchen mit dem durchschnittlichen Teilchendurchmesser in einem Bereich von 2 nm bis 30 nm oder den Nanoteilchen mit dem durchschnittlichen Teilchendurchmesser in einem Bereich von 50 nm bis 100 nm durch radikalisches reaktives Silan und cyanogruppenhaltiges Silan funktionalisiert ist.

3. Hartbeschichtung nach Anspruch 1, wobei zumindest ein Teil von sowohl den Nanoteilchen mit dem durchschnittlichen Teilchendurchmesser in einem Bereich von 2 nm bis 30 nm als auch den Nanoteilchen mit dem durchschnittlichen Teilchendurchmesser in einem Bereich von 50 nm bis 100 nm durch radikalisches reaktives Silan und cyanogruppenhaltiges Silan funktionalisiert ist.

4. Hartbeschichtung nach Anspruch 1, wobei zumindest ein Teil von entweder den Nanoteilchen mit dem durchschnittlichen Teilchendurchmesser in einem Bereich von 2 nm bis 30 nm oder den Nanoteilchen mit dem durchschnittlichen Teilchendurchmesser in einem Bereich von 50 nm bis 100 nm durch radikalisches reaktives Silan und cyanogruppenhaltiges Silan funktionalisiert ist.

5. Hartbeschichtung nach Anspruch 1, wobei sowohl die Nanoteilchen mit dem durchschnittlichen Teilchendurchmesser in einem Bereich von 2 nm bis 30 nm als auch die Nanoteilchen mit dem durchschnittlichen Teilchendurchmesser in einem Bereich von 50 nm bis 100 nm durch radikalisches reaktives Silan und cyanogruppenhaltiges Silan funktionalisiert sind.

6. Hartbeschichtung nach einem der vorstehenden Ansprüche, wobei das radikalische reaktive Silan mindestens eines von 3-Methacryloxypropyl-trimethoxysilan, 3-Aeryloxypropyl-trimethoxysilan, 3-Methacryloxypropyl-triethoxysilan, Acryloxyethyl-trimethoxysilan oder Vinyltriethoxysilan ist und wobei das cyanogruppenhaltige Silan mindestens eines von 3-Cyanopropyltriethoxysilan, 3-Cyanobutyltriethoxysilan oder 2-Cyanoethyltriethoxysilan ist.

7. Hartbeschichtung nach einem der vorstehenden Ansprüche mit einer Trübung bis zu 1,0, wie anhand des Trübungstests bestimmt.

8. Hartbeschichtung nach einem der vorstehenden Ansprüche, wobei das Verhältnis von durchschnittlichen Teilchendurchmessern von Nanoteilchen mit einem durchschnittlichen Teilchendurchmesser im Bereich von 2 nm bis 20 nm zu durchschnittlichen Teilchendurchmessern von Nanoteilchen mit einem durchschnittlichen Teilchendurchmesser im Bereich von 20 nm bis 100 nm in einem Bereich von 1:2 bis 1:200 liegt.

9. Artikel, der Folgendes umfasst:
ein Substrat mit einer Oberfläche und
eine Hartbeschichtungsschicht nach einem der vorstehenden Ansprüche, die auf der Oberfläche des Substrats angeordnet ist.

10. Verfahren zum Herstellen der Hartbeschichtung nach einem der Ansprüche 1 bis 7, wobei das Verfahren Folgendes umfasst:
Bereitstellen einer Mischung, die mindestens eines von Acryl-, (Meth)acryl-Oligomer- oder -Monomerbindemittel in einem Bereich von 5 Gew.-% bis 60 Gew.-%, bezogen auf das Gesamtgewicht der Mischung, und Nanoteilchen umfasst, wobei zumindest ein Teil der Nanoteilchen durch radikalisches reaktives Silan und cyanogruppenhaltiges Silan funktionalisiert ist; und
Härten des mindestens einen von Acryl-, (Meth)acryl-Oligomer- oder -Monomerbindemittel, um die Hartbeschichtung bereitzustellen.

11. Hartbeschichtung nach Anspruch 10, wobei das radikalische reaktive Silan mindestens eines von 3-Methacryloxypropyl-trimethoxysilan, 3-Acryloxypropyl-trimethoxysilan, 3-Methacryloxypropyl-triethoxysilan, Acryloxyethyl-trimethoxysilan oder Vinyltriethoxysilan ist und wobei das cyanogruppenhaltige Silan mindestens eines von 3-Cyanopropyltriethoxysilan, 3-Cyanobutyltriethoxysilan oder 2-Cyanoethyltriethoxysilan ist.

12. Verfahren nach einem der Ansprüche 10 oder 11, wobei das Härten aktinische Strahlung (z. B. Ultraviolett oder Elektronenstrahl) einschließt.

## Revendications

1. Revêtement dur comprenant :
un liant ;
dans une plage allant de 15 à 95 % en volume des nanoparticules, dans lequel au moins une partie des nanoparticules sont fonctionnalisées par un silane réactif par radicaux libres et un silane contenant un groupe cyano, dans lequel 10 à 40 % en volume des nanoparticules sont les nanoparticules ayant un diamètre particulaire moyen dans une plage allant de 2 nm à 30 nm et 20 à 60 % en volume des nanoparticules ont un diamètre particulaire moyen dans une plage allant de 50 nm à 100 nm, sur la base du volume total du revêtement dur.

2. Revêtement dur selon la revendication 1, dans lequel au moins une partie d'au moins un type parmi les nanoparticules ayant le diamètre particulaire moyen dans une plage allant de 2 nm à 30 nm ou les nanoparticules ayant le diamètre particulaire moyen dans une plage allant de 50 nm à 100 nm est fonctionnalisée par un silane réactif par radicaux libres et un silane contenant un groupe cyano.

3. Revêtement dur selon la revendication 1, dans lequel au moins une partie de l'un et l'autre type parmi les nanoparticules ayant le diamètre particulaire moyen dans une plage allant de 2 nm à 30 nm et les nanoparticules ayant le diamètre particulaire moyen dans une plage allant de 50 nm à 100 nm est fonctionnalisée par un silane réactif par radicaux libres et un silane contenant un groupe cyano.

4. Revêtement dur selon la revendication 1, dans lequel au moins une partie d'un seul type parmi les nanoparticules ayant le diamètre particulaire moyen dans une plage allant de 2 nm à 30 nm ou les nanoparticules ayant le diamètre particulaire moyen dans une plage allant de 50 nm à 100 nm est fonctionnalisée par un silane réactif par radicaux libres et un silane contenant un groupe cyano.

5. Revêtement dur selon la revendication 1, dans lequel tant les nanoparticules ayant le diamètre particulaire moyen dans une plage allant de 2 nm à 30 nm que les nanoparticules ayant le diamètre particulaire moyen dans une plage allant de 50 nm à 100 nm sont fonctionnalisées par un silane réactif par radicaux libres et un silane contenant un groupe cyano.

6. Revêtement dur selon une quelconque revendication précédente, dans lequel le silane réactif par radicaux libres est au moins l'un parmi le 3-méthacryloxypropyl-triméthoxysilane, le 3-acryloxypropyl-triméthoxysilane, le 3-méthacryloxypropyl-triéthoxysilane, l'acryloxyéthyl-triméthoxysilane, ou le vinyl-triéthoxysilane et dans lequel le silane contenant un groupe cyano est au moins l'un parmi 3-cyanopropyl-triéthoxysilane, 3-cyanobutyl-triéthoxysilane, ou 2-cyanoéthyl-triéthoxysilane.

7. Revêtement dur selon une quelconque revendication précédente, ayant un trouble jusqu'à 1,0 tel que déterminé par le test de trouble.

8. Revêtement dur selon une quelconque revendication précédente, dans lequel le rapport des diamètres particulaires moyens des nanoparticules ayant un diamètre particulaire moyen dans la plage allant de 2 nm à 20 nm aux diamètres particulaires moyens des nanoparticules ayant un diamètre particulaire moyen dans la plage allant de 20 nm à 100 nm est dans une plage de 1:2 à 1:200.

9. Article comprenant :
un substrat ayant une surface, et
une couche de revêtement dur selon une quelconque revendication précédente disposée sur la surface du substrat.

10. Procédé de fabrication du revêtement dur selon l'une quelconque des revendications 1 à 7, le procédé comprenant :
la fourniture d'un mélange comprenant au moins l'un parmi un acrylique, un oligomère (méth)acrylique, ou un liant monomère dans une plage allant de 5 % en poids à 60 % en poids, sur la base du poids total du mélange, et des nanoparticules, dans lequel au moins une partie des nanoparticules est fonctionnalisée par un silane réactif par radicaux libres et un silane contenant un groupe cyano ; et
le durcissement dudit au moins un parmi l'acrylique, l'oligomère (méth)acrylique, ou le liant monomère pour fournir le revêtement dur.

11. Revêtement dur selon la revendication 10, dans lequel le silane réactif par radicaux libres est au moins l'un parmi le 3-méthacryloxypropyl-triméthoxysilane, le 3-acryloxypropyl-triméthoxysilane, le 3-méthacryloxypropyl-triéthoxysilane, l'acryloxyéthyl-triméthoxysilane ou le vinyl-triéthoxysilane et dans lequel le silane contenant un groupe cyano est au moins l'un parmi le 3-cyanopropyl-triéthoxysilane, le 3-cyanobutyl-triéthoxysilane ou le 2-cyanoéthyl-triéthoxysilane.

12. Procédé selon la revendication 10 ou la revendication 11, dans lequel le durcissement inclut un rayonnement actinique (par exemple, ultraviolet ou faisceau d'électrons).
